# FASCICULE DE BREVET EUROPEEN

(11) **EP 1 818 939 B1**
(45) Date de publication et mention de la délivrance du brevet: **15.04.2009**
(21) Numéro de dépôt: 07290127.5
(22) Date de dépôt: 31.01.2007
(51) Int. Cl.: G11B 33/04, B65D 85/57

(54) **Dispositif pour le conditionnement de supports d'enregistrement plats**
Vorrichtung zur Verpackung von flachen Datenträgern
Device for packaging flat recording media

(30) Priorité: 01.02.2006 FR 0650350
(43) Date de publication de la demande: 15.08.2007
(73) Titulaire: Laroche, Francis, 16800 Soyaux (FR)
(72) Inventeur: Laroche, Francis, 16800 Soyaux (FR)
(74) Mandataire: Novagraaf IP

(56) Documents cités:
- WO-A-20/05106885
- WO-A2-20/04071784
- US-A- 5 484 054
- US-A- 5 769 217
- US-A- 5 779 423
- US-A- 6 092 650
- US-A1- 2005 145 514

## Description

La présente invention concerne le domaine du conditionnement de disques, notamment de CD et de DVD, les cartes mémoires UMD et plus généralement tout support d'enregistrement.

On connaît dans l'état de la technique de nombreuses solutions, mettant en oeuvre des emballages en carton, ou plus généralement en plastique. Le conditionnement le plus répandu est connu sous le nom de « jewel box » (nom commercial). Il est formé de deux plateaux en matière plastique rigide articulé par une charnière formée par deux pattes prolongeant la tranche de l'un des plateaux, interagissant avec des axes prévus sur la tranche de l'autre plateau.

Cette solution est très fragile et l'aspect général n'est pas très satisfaisant.

La présente invention vise à remédier à cet inconvénient en proposant une solution permettant le conditionnement de supports plat, tels que des disques, solide et élégant.

On connaît dans l'état de la technique d'autres boîtiers. En particulier la demande internationale W005106885 concerne un emballage de disques multimédia comprenant plusieurs plateaux de réception de disques disposés en pile, chaque plateau de la pile possédant au moins un bord à charnière. Chaque bord à charnière comporte au moins un appendice de fixation s'étendant à partir dudit bord. Une pince de fixation comprend plusieurs segments qui sont reliés les uns aux autres par des liaisons souples, chaque segment comportant au moins une fixation servant à recevoir un appendice de fixation. Les plateaux adjacents de la pile sont articulés entre eux par logement d'un ou plusieurs appendices de fixation respectifs de chaque plateau adjacent dans un logement positionné de façon correspondante à l'intérieur de la pince de fixation.

Dans ce brevet, une variante de réalisation prévoit la fixation sur le plateau inférieur d'une couverture formant un rabat libre venant se placer sur le plateau supérieur. Cette couverture et ce rabat ont une fonction décorative et ne contribuent pas à la solidification du boîtier. D'ailleurs, la page 11 de la demande internationale précise expressément que seule la partie inférieure de la couverture est attachée au boîtier.

À cet effet, l'invention concerne selon son acception la plus générale un dispositif pour le conditionnement de supports d'enregistrement plats comprenant une boîte en plastique formée d'au moins un plateau articulé par une charnière, l'une des plateaux présentant au moins un moyen de maintien d'au moins un disque, caractérisé en ce qu'il comporte une reliure formée par une feuille présentant deux flancs principaux et d'un dos formé de trois sections délimités par des rainants. La feuille est attachée à la fois sur la surface extérieure du plateau inférieur et sur la surface extérieure du plateau supérieur, le dos étant par contre au moins en partie indépendant du boîtier.

La longueur des flancs est inférieure à la longueur d'un plateau. La longueur de la section médiane du dos correspond sensiblement à l'épaisseur de ladite boîte en plastique et la longueur des deux sections latérales correspondant sensiblement à la différence entre la longueur du plateau et la longueur du flanc principal.

Avantageusement, ladite reliure est fixée sur la boîte par collage de chacun des flans principaux sur le plateau correspondant.

Selon une variante particulière, l'un au moins des flancs de ladite reliure est prolongé par une patte rabattable sur une bande intérieure latérale du plateau correspondant.

De préférence, la reliure présente un rainant externe pour la liaison entre un flanc et une section latérale du dos, et un rainant interne pour la liaison entre la section latérale et une section médiane du dos.

Selon une variante, l'un des flancs présente une découpe laissant apparaître la surface du disque à travers le plateau transparente formant la boîte plastique.

L'invention sera mieux comprise à la lecture de la description qui suit, se référant aux dessins annexés relatifs à un exemple non limitatif de réalisation où :

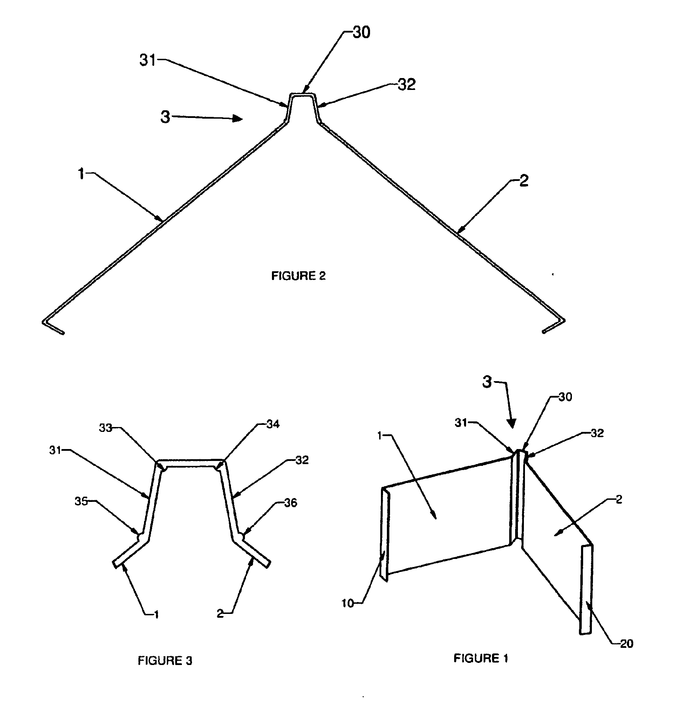

- la figure 1 représente une vue en perspective de la reliure ;
- la figure 2 représente une vue en coupe de la reliure ;
- la figure 3 représente une vue en coupe du dos de la reliure ;
- la figure 4 représente une vue du dispositif en position ouverte ;
- les figures 5 à 7 représentent des variantes de réalisation d'une reliure pour un conditionnement selon l'invention.

Le dispositif comprend un boîtier de CD et une reliure.

Le boîtier de CD est formé par deux plateaux en matière plastique. L'un au moins des plateaux comprend un logement pour maintenir un disque. L'un des plateaux présente deux pattes prolongeant les cotés respectivement supérieurs et inférieurs. L'autre plateau présente des pivots complémentaires venant se loger dans des trous d'articulation desdites pattes. Ces pattes forment ainsi une articulation permettant d'articuler les deux plateaux pour ouvrir et refermer le boîtier.

Pour éviter que des efforts excessifs ne s'exercent sur cette articulation, la reliure collée respectivement sur l'un et l'autre des plateaux assure une rigidification par rapport à des contraintes de torsion en cas de mauvaise utilisation.

La reliure est formée par une feuille de carton ou tout autre matériau imprimé présentant deux flancs (1, 2) et un dos (3). La feuille de carton est par exemple une feuille de cinq dixièmes de millimètres, imprimée sur la face extérieure.

Le dos (3) est formé par une section médiane (30) prolongée de part et d'autre par des sections latérales (31, 32). L'articulation des sections latérales (31, 32) par rapport à la section médiane (30) est faite par l'intermédiaire de rainants (33, 34) internes.

La longueur des sections latérales (31, 32) est de l'ordre de 5 millimètres.

L'articulation de la section latérale (31, 32) par rapport au flanc (1, 2) correspondant est réalisée par l'intermédiaire d'un rainant externe (35, 36).

La longueur cumulée d'une section latérale du dos (31, 32) et d'un flanc (1, 2) correspond sensiblement à la longueur de la coque ou plateau correspondant du boîtier de CD sur lequel est collée la reliure.

Ce boîtier est réalisé, de préférence, en matière plastique injectée ou thermoformée.

Selon une alternative, cette longueur cumulée est légèrement supérieure à la longueur du plateau, par exemple de 3 millimètres environ.

Chaque flan (1, 2) est prolongé par une patte (10, 20) rabattable venant recouvrir la tranche d'un plateau du boîtier, et une bande latérale de la surface intérieure du plateau correspondant.

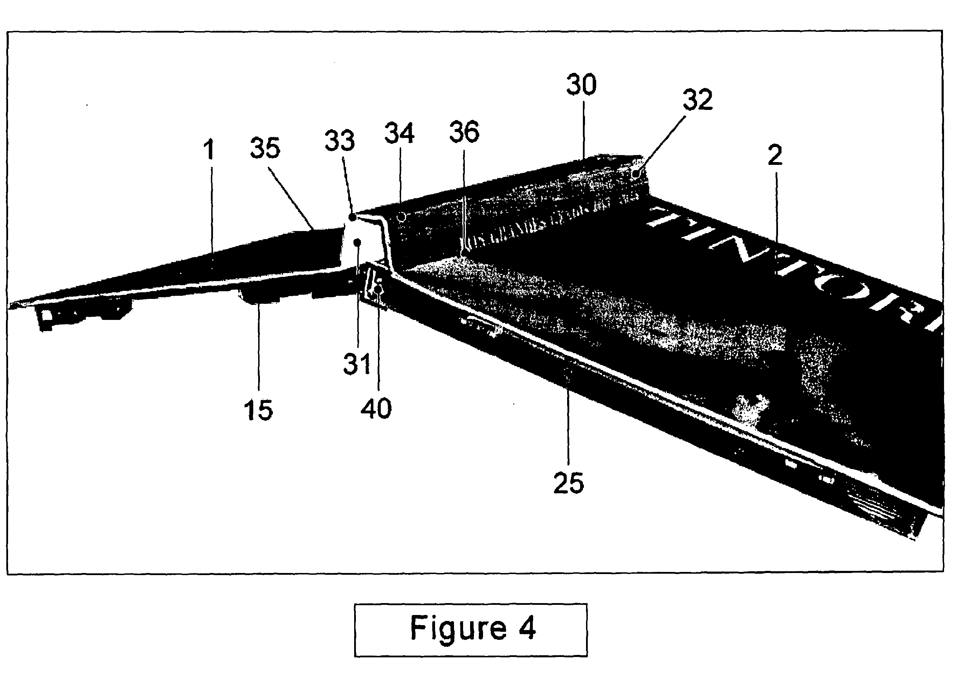

La figure 4 représente une vue d'un conditionnement en position ouverte. La reliure est collée sur le boîtier, au niveau des flancs (1, 2) et de la surface extérieure des deux plateaux (15, 25).

La zone d'articulation de la coque est laissée libre pour permettre une déformation du dos (3) lors de l'ouverture et de la fermeture du boîtier.

La reliure est imprimée pour décorer le conditionnement. Elle renforce par ailleurs le conditionnement en limitant les efforts s'exerçant sur la charnière (40) du boîtier.

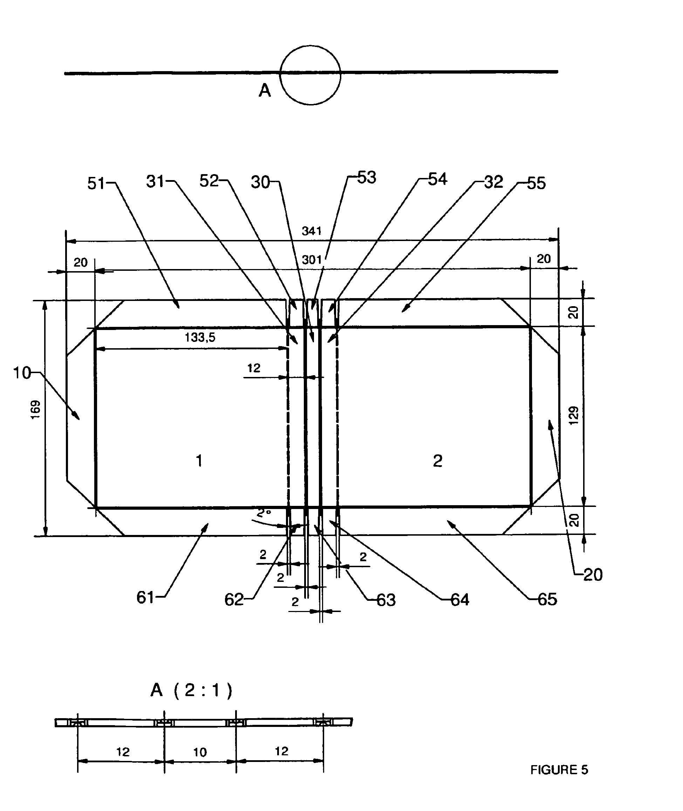

La figure 5 représente une variante de réalisation d'une reliure pour un conditionnement de boîtier de CD. Elle présente deux flancs (1, 2) d'une longueur de 132 millimètres chacun. Le dos (3) présente trois bandes (30 à 32) d'une longueur de 12 millimètres chacune, séparées par des rainants d'une épaisseur de 2 millimètres. Les flancs (1, 2) ainsi que les sections (30 à 32) du dos sont prolongés par des pattes (51 à 55 et 61 à 65) rabattables sur la tranche des plateaux du boîtier recouverts par la reliure. Les flancs (1, 2) sont en outre prolongés par des pattes rabattables (10, 20). La largeur de ces pattes est de 20 millimètres.

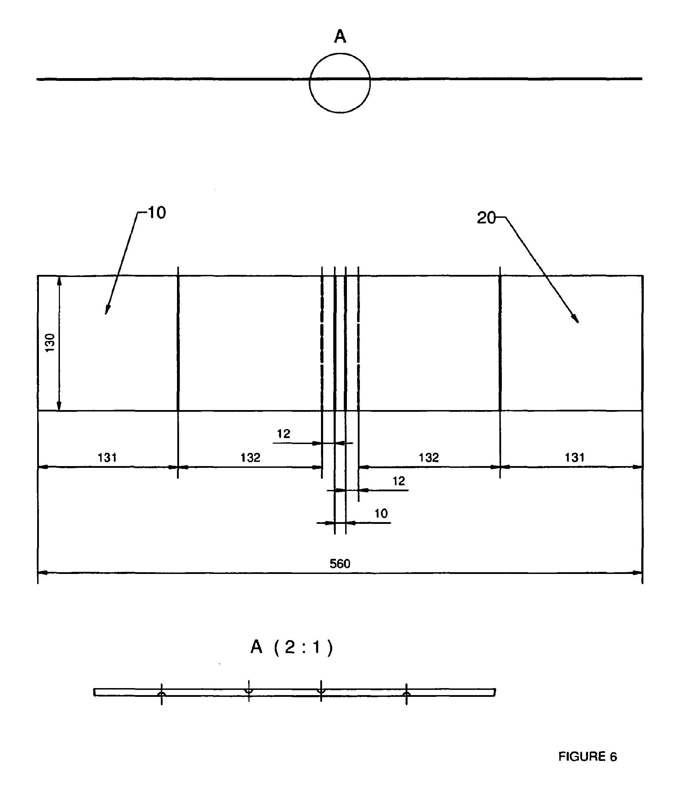

La figure 6 représente une variante où les pattes (10, 20) prolongeant les flancs (1, 2) présentent une longueur similaire à celle des flancs (1, 2), soit 131 millimètres.

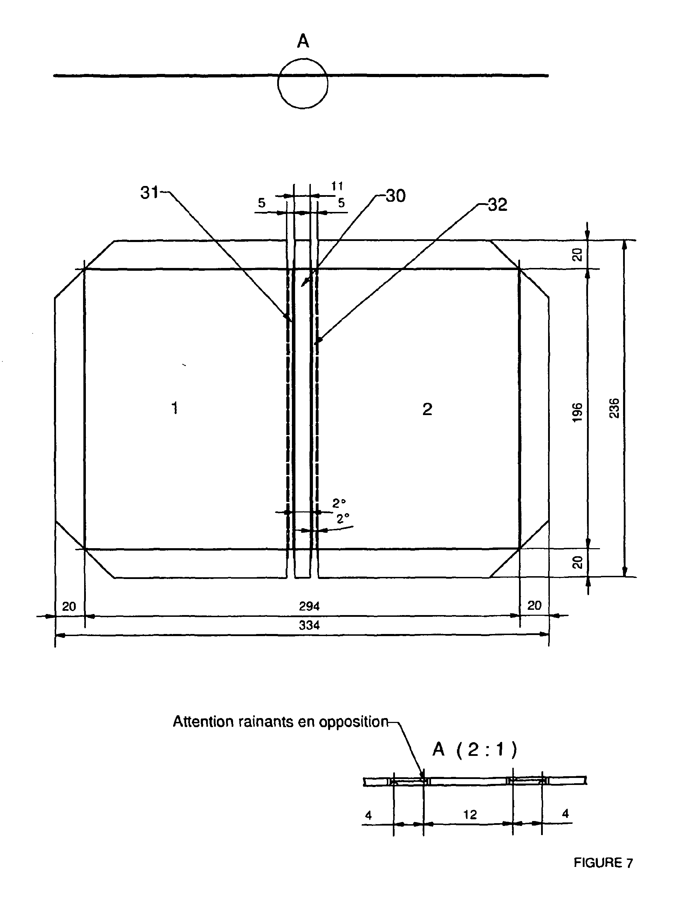

La figure 7 représente une autre variante pour le conditionnement de DVD. Le dos présente une section centrale (30) d'une longueur de 11 millimètres et deux sections latérales (31, 32) d'une largeur de 5 millimètres.

## Revendications

1. Dispositif pour le conditionnement de supports d'enregistrement plats comprenant une boîte en plastique formée d'au moins deux plateaux (15, 25) articulé par une charnière, l'un des plateaux présentant au moins un moyen de maintien d'au moins un disque, ledit dispositif comportant également une reliure formée par une feuille présentant deux flancs principaux (1, 2) et un dos (3) formé de trois sections (30, 31, 32) délimités par des rainants, **caractérisé en ce que** ladite feuille est attachée à la fois sur la surface extérieure du plateau inférieure et sur la surface extérieure du plateau supérieure, le dos étant par contre au moins en partie indépendant du boîtier.

2. Dispositif selon la revendication 1, dans lequel la longueur desdits deux flancs (1, 2) principaux est inférieure à la longueur d'un plateau.

3. Dispositif selon la revendication 2, dans lequel ledit dos est formé de trois sections (30, 31, 32) délimitées par des rainants, la longueur de la section médiane (30) correspondant sensiblement à l'épaisseur de ladite boîte en plastique et la longueur des deux sections latérales (31, 32) correspondant sensiblement à la différence entre la longueur du plateau et la longueur du flanc principal (1, 2), ladite reliure étant fixée sur la boîte par collage de chacun des flancs principaux sur le plateau correspondant.

4. - Dispositif selon l'une au moins des revendications précédentes, dans lequel l'un au moins des flancs de ladite reliure est prolongé par une patte rabattable sur une bande intérieure latérale du plateau correspondant.

5. Dispositif selon l'une au moins des revendications précédentes, dans lequel la reliure présente un rainant externe pour la liaison entre un flanc et une section latérale du dos, et un rainant interne pour la liaison entre la section latérale et une section médiane du dos.

6. Dispositif selon l'une au moins des revendications précédentes, dans lequel longueur cumulée du flanc et du segment latéral du dos est légèrement supérieure à la longueur du plateau.

7. - Dispositif selon l'une au moins des revendications précédentes, dans lequel l'un des flancs (1) présente une découpe.

## Claims

1. A device for packaging flat recording media comprising a plastic box composed of at least two trays (15, 25) which are jointed by a hinge, with one of the trays having at least means for holding at least one disk, said device also having a binding composed of a sheet having two main flanks (1, 2) and a back (3) composed of three sections (30, 31, 32) limited by grooves, **characterized in that** said sheet is fixed both to the outer surface of the lower tray and to the outer surface of the upper tray, with the back being at least partially independent of the box.

2. A device according to claim 1, wherein the length of said two main flanks (1, 2) is smaller than the length of one tray.

3. A device according to claim 2, wherein said back is composed of three sections (30, 31, 32) limited by grooves, with the length of the middle section (30) substantially corresponding to the thickness of said plastic box and the length of the two side sections (31, 32) substantially corresponding to the difference between the length of the tray and the length of the main flank (1, 2), said binding being fixed on the box by gluing each main flank on the corresponding tray.

4. A device according to at least one of the preceding claims, wherein at least one of the flanks of said binding is extended by a tab which can be folded onto an inner side strip of the corresponding tray.

5. A device according to at least one of the preceding claims, wherein the binding has an outer groove for the connection between a flank and a side section of the back, and an inner groove for the connection between the site section and a middle section of the back.

6. A device according to at least one of the preceding claims, wherein the cumulative length of the flank and the side segment of the back is slightly greater than the length of the tray.

7. A device according to at least one of the preceding claims, wherein one of the flanks (1) has a cutout.

## Patentansprüche

1. Vorrichtung für die Verpackung von flachen Aufnahmeträgern mit einer Schachtel aus Plastik, die aus wenigstens zwei durch ein Scharnier artikulierte Platten (15, 25) gebildet wird, wobei eine der Platten wenigstens ein Festhaltemittel wenigstens einer Scheibe aufweist, wobei die genannte Vorrichtung ebenfalls einen durch ein Blatt gebildeten Einband umfasst, der zwei Hauptseiten (1, 2) und einen Rücken (3) aufweist, der durch drei Abschnitte (30, 31, 32) gebildet wird, welche durch Kehlungen begrenzt werden, **dadurch gekennzeichnet, dass** das genannte Blatt gleichzeitig auf der Außenseite der unteren Platte und auf der Außenseite der oberen Platte befestigt ist, wobei der Rücken hingegen wenigstens zum Teil unabhängig vom Gehäuse ist.

2. Vorrichtung gemäß Anspruch 1, in dem die Länge der genannten zwei Hauptflanken (1, 2) kürzer ist als die Länge einer Platte.

3. Vorrichtung gemäß Anspruch 2, in dem der genannte Rücken aus drei Abschnitten (30, 31, 32) gebildet wird, die durch Kehlungen begrenzt werden, wobei die Länge des mittleren Abschnitts (30) deutlich der Dicke der genannten Schachtel aus Plastik entspricht und die Länge der zwei lateralen Abschnitte (31, 32) deutlich der Differenz zwischen der Länge der Platte und der Länge der Hauptseiten (1, 2) entspricht, wobei der genannte Einband auf der Schachtel per Verklebung jeder der Hauptseiten auf der entsprechenden Platte befestigt ist.

4. Vorrichtung gemäß wenigstens einem der vorherigen Ansprüche, in der wenigstens eine der Seiten des genannten Einbandes durch einen umklappbaren Umschlag auf einem inneren lateralen Band der entsprechenden Platte verlängert ist.

5. Vorrichtung gemäß wenigstens einem der vorherigen Ansprüche, in der der Einband eine externe Kehlung für die Verbindung zwischen einer Seite und einem lateralen Abschnitt des Rückens und eine interne Kehlung für die Verbindung zwischen dem lateralen Abschnitt und einem mittleren Abschnitt des Rückens aufweist.

6. Vorrichtung gemäß wenigstens einem der vorherigen Ansprüche, in der die kumulierte Länge der Seite und des lateralen Segments des Rückens leicht größer ist als die Länge der Platte.

7. Vorrichtung gemäß wenigstens einem der vorherigen Ansprüche, in der eine der Seiten (1) einen Ausschnitt aufweist.
